# EUROPEAN PATENT SPECIFICATION

(11) **EP 1 427 592 B1**
(45) Date of publication and mention of the grant of the patent: **31.05.2006**
(21) Application number: 02757598.4
(22) Date of filing: 05.09.2002
(51) Int. Cl.: B41M 5/00, C08G 18/08

(54) **POLYMER PROCESSING OF A SUBSTANTIALLY WATER-RESISTANT MICROPOROUS SUBSTRATE**
POLYMERBESCHICHTUNG EINES WASSERBESTÄNDIGEN, MIKROPORÖSEN TRÄGERS
TRAITEMENT PAR POLYMERE D'UN SUBSTRAT MICROPOREUX SENSIBLEMENT RESISTANT A L'EAU

(30) Priority: 05.09.2001 US 317113 P; 30.08.2002 US 231305
(43) Date of publication of application: 16.06.2004
(73) Proprietor: PPG Industries Ohio, Inc., Cleveland, OH 44111 (US)
(72) Inventor: BENENATI, Paul, L., Wadsworth, OH 44281 (US); KAHLE, Charles, F., Pittsburgh, PA 15237 (US); HILL, Charles, T., New Brighton, PA 15066 (US); LIPKO, Larry, E., North Irwin, PA 15642 (US); KOVACS, Joseph, P., The Woodlands, TX 77382 (US); PARRINELLO, Luciano, M., Allison Park, PA 15101 (US)
(74) Representative: Sternagel, Fleischer, Godemeyer & Partner
(86) International application number: PCT/US2002/028238
(87) International publication number: WO 2003/020530

(56) References cited:
- EP-A- 0 289 859
- EP-A- 1 048 479

## Description

The present invention is directed to a multilayer article comprising a substantially water-resistant, coated, microporous substrate connected to a substantially nonporous material. Further, the present invention is directed to a process for producing the multilayer article.

EP-A-1,048,479 relates to an ink jet recording material comprising a substrate material and a multilayered ink fixing layer formed on a surface of the substrate material and composed of an outermost ink fixing layer and one or more intermediate ink fixing layers superposed on each other and each comprising a pigment comprising at least one member selected from the group consisting of silica, aluminosilicate, alumina and zeolite, and a binder, wherein the pigment in each ink fixing layer is in the form of fine secondary particles having an average secondary particle size of 1 *µ*m or less and each secondary particle is composed of a plurality of primary particles agglomerated with each other to form a secondary particle, and the outermost ink fixing layer is one formed by a cast-coating procedure.

EP-A-289 859 discloses a microporous material substrate comprising a matrix consisting essentially of linear ultramolecular weight polyolefin, a large proportion of finely divided water-insoluble siliceous filler, and interconnecting pores that is printable with printing ink.

The present invention is directed to a multilayer article comprising a microporous substrate at least partially connected to a substantially nonporous material, said microporous substrate at least partially coated with a substantially water-resistant coating composition, said coating composition comprising a stable dispersion of:
(a) an aqueous polyurethane dispersion; and
(b) a cationic nitrogen-containing polymeric dye fixative material at least partially dissolved in an aqueous medium.

Suitable microporous substrates for use in the present invention include microporous substrates known in the art such as cellulosic-based paper. Further, the following United States Patents describe suitable microporous substrates for use in the present invention: 4,861,644; 4,892,779; and 5,196,262. Moreover, United States Patent Application having Serial No. 60/309,348 having a file date of August 1, 2001, which is pending in the Patent Office describes a suitable microporous substrate for use in the present invention.

In an embodiment, the microporous substrate, having a top surface and a bottom, comprises:
(a) a polyolefin;
(b) a particulate silica material; and
(c) a porosity wherein pores constitute at least 35 percent by volume of the microporous substrate.

The polyolefin for use in the microporous substrate of the present invention can include a polyolefin known in the art such as polyethylene or polypropylene. In one non-limiting embodiment, the polyethylene is an essentially linear high molecular weight polyethylene having an intrinsic viscosity of at least 10 deciliters/gram, and the polypropylene is an essentially linear high molecular weight polypropylene having an intrinsic viscosity of at least 5 deciliters/gram. As used herein and the claims "high molecular weight" refers to a weight average molecular weight of from 20,000 to 2,000,000.

As recorded herein and in the claims, intrinsic viscosity is determined by extrapolating to zero concentration the reduced viscosities or the inherent viscosities of several dilute solutions of the polyolefin wherein the solvent is distilled decahydronaphthalene to which 0.2 percent by weight, 3,5-di-tert-butyl-4-hydroxyhydrocinnamic acid, neopentanetetrayl ester [CAS Registry No. 6683-19-8] has been added. The reduced viscosities or the inherent viscosities of the polyolefin are ascertained from relative viscosities obtained at 135°C using an Ubbelohde No. 1 viscometer in accordance with the general procedures of ASTM D 4020-81, except that several dilute solutions of differing concentration are employed.

The particulate silica material used in the present invention can be selected from a wide variety of known materials. Suitable non-limiting examples include silica, mica, montmorillonite, kaolinite, asbestos, talc, diatomaceous earth, vermiculite, natural and synthetic zeolites, cement, calcium silicate, aluminum silicate, sodium aluminum silicate, aluminum polysilicate, alumina silica gels, and glass particles. Silica and clays are commonly used. In one non-limiting embodiment, precipitated silica, silica gel, or fumed silica is used. In another one non-limiting embodiment, precipitated silica is used.

In general, silica can be prepared by combining an aqueous solution of a soluble metal silicate with an acid. The soluble metal silicate is typically an alkali metal silicate such as sodium or potassium silicate. The acid can be selected from the group consisting of mineral acids, organic acids, and carbon dioxide. The silicate/acid slurry can then be aged. An acid or base is added to the silicate/acid slurry. The resultant silica particles are separated from the liquid portion of the mixture. The separated silica is washed with water, the wet silica product is dried, and then the dried silica is separated from residues of other reaction products, using conventional washing, drying and separating methods.

Silica prepared by the above-described process can be a particulate material in the form of aggregates. These aggregates are composed of substantially solid, substantially spherical particles which are know in the art as primary or ultimate particles. In an embodiment, the primary or ultimate particles can have a particle size of less than 0.1 µm as measured by a laser analyzer such as a Beckman Coulter LS 230. Methods for characterizing primary particles have been described in prior art references (e.g., "The Chemistry of Silica," Ralph K. Iler, 1979 John Wiley & Sons, New York, Chapter 5). It is known in the art that primary or ultimate particles having a particle size of less than 0.1 µm show a tendency to group together and form covalent siloxane bonds between the particles, in addition to the siloxane bonds within the primary particles. These primary or ultimate particles collect and group together to form reinforced covalently bonded structures referred to as aggregates. In the silica for use in the present invention, the aggregates have a particle size of from 0.1 to 1 µm as measured by the aforementioned Beckman Coulter LS 230. The aggregates collect and group together to form a loose agglomerate structure having an open porosity

In the present invention, at least 90 percent by weight of the silica particles used in preparing the microporous substrate have particle sizes in the range of from 5 to 40 µm. The particle size is determined by use of a Model TaII Coulter Multisizer Particle Size Analyzer (Coulter Electronics, Inc.) according to ASTM C 690-80, but modified by stirring the filler for 10 minutes in Isoton II electrolyte solution (Curtin Matheson Scientific, Inc.) using a four-blade, 4.445 centimeter diameter propeller stirrer. In one non-limiting embodiment, at least 90 percent by weight of the silica particles have particle sizes in the range of from 10 to 30 micrometers.

United States Patents 2,940,830 and 4,681,750; and United States Patent Application having Serial Number 09/882,549 which was filed on July 14, 2001 and is pending, describe suitable precipitated silica for use in the present invention and methods for its production.

In one non-limiting embodiment, the silica particles are finely-divided. As used herein and in the claims, "finely-divided" refers to a maximum retention of 0.01 % by weight on a 40 mesh sieve screen.

In one non-limiting embodiment, the silica particles are substantially insoluble. As used herein and in the claims, the term "substantially insoluble" refers to solubility in water which can range from 70 ppm to greater than 150 ppm in water at a temperature of 25°C. It is believed that variations in solubility are due to differences in particle size, state of internal hydration and the presence of trace impurities in the silica or absorbed on its surface. The solubility of the silica can also be dependent on the pH of the water. As pH increases from neutrality (i.e., pH of 7) to alkalinity (i.e., pH greater than 9), the solubility of silica can increase. (See "The Chemistry of Silica", R.K. Iler, Wiley-Interscience, NY (1979), pp. 40-58.)

In one non-limiting embodiment, the silica particles for use in the present invention are coated prior to incorporation into the microporous substrate. United States Patent Applications having serial numbers 09/636,711; 09/636,312; 09/636,310; 09/636,308; 09/636,311; and 10/041,114; disclose suitable coating compositions and methods of coating silica particles which can be used in the present invention. The coating can be applied by a method known in the art. The selection of the method of coating the silica particles is not critical. For example, the coating ingredients can be added to an aqueous slurry of pre-washed silica filter cake under sufficient stirring to allow for complete mixing of the ingredients, followed by drying, using conventional techniques known in the art.

The particulate silica material constitutes from 50 to 90 percent by weight of the microporous substrate. In one non-limiting embodiment, the particulate silica material constitutes from 50 to 85 percent, or from 60 to 80 percent by weight of the microporous substrate.

The microporous substrate for use in the present invention has a porosity such that the pores constitute at least 35 percent by volume of the microporous substrate. As used herein and the claims, the term "pore(s)" refers to a minute opening(s) through which matter passes. In many instances, the pores constitute at least 60 percent by volume of the microporous substrate. Often, the pores constitute from 35 percent to 95 percent by volume of the microporous substrate. In one non-limiting embodiment, the pores constitute from 60 percent to 75 percent by volume.

In one non-limiting embodiment of the invention, the substrate is highly porous. The term "highly porous" refers to a substrate having a porosity of not more than 20,000, or not more than 10,000 and in many cases not more than 7,500 seconds/100cm³ air. The porosity is typically at least 50 seconds/100cm³ air. These porosity values are determined in accordance with the method described in ASTM D726, with the following exceptions relative to Section 8 of the ASTM. In the present invention, the sheet samples are tested without conditioning in accordance with ASTM D685, and only three (3) specimens for a given sample type are tested for a total of six (6) measurements (three measurements per two surfaces) for a given specimen type rather than a minimum of ten specimens for a given samples as stated in ASTM D726. The lower the value in seconds/cm³ air, the more porous is the substrate.

Highly porous substrates can be produced by various methods known in the art, such as thermally treating a substrate, orienting, compositionally by increasing the silica content, microvoiding films, or etching. Examples of highly porous substrates include thermally treated microporous materials such as Teslin TS-1000 which is commercially available from PPG Industries, Inc., Pittsburgh, PA.

In addition to the particulate silica materials, substantially water-insoluble non-particulate silica materials can also be used in the microporous substrate. Examples of such optional non-silica particles include particles of titanium oxide, iron oxide, copper oxide, zinc oxide, antimony oxide, zirconia, magnesia, alumina, molybdenum disulfide, zinc sulfide, barium sulfate, strontium sulfate, calcium carbonate, magnesium carbonate, magnesium hydroxide, and finely divided substantially water-insoluble flame retardant particles such as particles of ethylenebis(tetra-bromophthalimide), octabromodiphenyl oxide, decabromodiphenyl oxide, and ethylenebisdibromonorbornane dicarboximide.

The microporous substrate for use in the present invention can be coated with a substantially water-resistant coating composition. In one non-limiting embodiment, at least one side of the microporous substrate is coated with a substantially water-resistant composition. An example of a suitable coating composition for use in the present invention comprises a stable dispersion of an aqueous polyurethane dispersion, and a cationic nitrogen-containing polymeric dye fixative material which is at least partially dissolved in an aqueous medium. Suitable aqueous polyurethane dispersions include known water-dispersible nonionic polyurethanes, anionic polyurethanes, cationic polyurethanes, and mixtures thereof. Polyurethane dispersions and their preparation are known in the are; for example, Szycher (i.e., "Szycher's Book of Polyurethanes" by Michael Szycher, CRC Press, New York, NY, 1999, Section 14) describes the preparation of water dispersions of various polyurethanes.

The addition of an aqueous solution of a cationic nitrogen-containing polymer to an aqueous anionic polyurethane dispersion results in a stable dispersion which is useful as a coating composition for an microporous substrate. However, a reversal in the order of addition such that the anionic polyurethane dispersion is added to the aqueous solution of a cationic nitrogen-containing polymer, can result in the formation and precipitation of a polysalt from the aqueous solution, if sufficient mixing is not employed.

In one non-limiting embodiment, an aqueous dispersion of an anionic polyurethane resin for use in the invention comprises particles of an anionic polyurethane polymer dispersed in an aqueous medium. The polyurethane polymer has at least one pendent acid group which can be neutralized in the presence of a base to form anionic group(s), which stabilize the dispersion.

The anionic polyurethane for use in the invention can be prepared by a method known in the art. For example, the reaction of (i) a polyisocyanate, (ii) a polyol, (iii) a compound having an acid group, and optionally (iv) a chain-extending compound such as a polyamine or hydrazine, produces a suitable anionic polyurethane. As used herein and the claims, "polyisocyanate" refers to a compound having more than one isocyanate group. Examples of suitable polyisocyanates for use in the present invention include diisocyanates such as toluene diisocyanate, hexamethylene diisocyanate, isophorone diisocyanate and dicyclohexyl methane diisocyanate; three or more functional isocyanates which can be the reaction products of diisocyanates with polyols such as trimethylol propane, glycerol and pentaerythritol. Suitable polyisocyanates for use in the invention are commercially available from Bayer Corporation under the tradename Desmodur.

As used herein and the claims, "polyol" refers to a compound with more than one hydroxyl group. Non-limiting examples of suitable polyols are simple polyols such as those used to prepare polyisocyanate, polyester polyols and polyether polyols.

The anionic polyurethane for use in the present invention can include an acid group such as a carboxylic acid or sulfonic acid group and two groups, which can react with either a polyisocyanate or a polyol. An non-limiting example of a group, which can react with a polyol, is an isocyanate group. Non-limiting examples of groups which can react with a polyisocyanate include hydroxyl groups and amine groups. An example of a compound having two hydroxyl groups and an acid group is dimethylol proprionic acid. An example of a polyamine includes ethylene diamine, isophorone diamine or diethylene triamine.

In one non-limiting embodiment, the anionic polyurethane dispersion for use in the invention can be dispersed using a base which ionizes the acidic group(s) on the polymer and stabilizes the dispersion. The base can include any known inorganic base, ammonia or an amine.

The (i) polyisocyanate, (ii) the compound having an acid group, and (iii) the polyol can be reacted in the presence of an organic solvent to form an isocyanate-terminated prepolymer. Suitable organic solvents include n-methyl pyrrolidone, tetrahydrofuran or a glycol ether. The isocyanate-terminated prepolymer can be dispersed in water in the presence of a base, and then chain extended by adding the polyamine. In one non-limiting embodiment, the prepolymer is chain extended in an organic solvent solution and then the polyurethane polymer is dispersed in water in the presence of the base.

Non-limiting examples of suitable anionic polyurethanes for use in the present invention include anionic polyurethanes based on aromatic polyether polyurethanes, aliphatic polyether polyurethanes, aromatic polyester polyurethanes, aliphatic polyester polyurethanes, aromatic polycaprolactam polyurethanes, and/or aliphatic polycaprolactam polyurethanes. An anionic polyurethane dispersion for use in the present invention is commercially available from Crompton Corporation under the tradename WitcoBond® .

The aqueous anionic polyurethane dispersion of the coating composition contains up to 70 wt. %, or up to 65 wt. %, or up to 60 wt. %, or up to 50 wt. % of the anionic polyurethane. The aqueous anionic polyurethane dispersion includes at least 1 wt. %, or at least 5 wt. %, or at least 10 wt. %, or at least 20 wt. % of the anionic polyurethane. The amount of anionic polyurethane in the aqueous anionic polyurethane dispersion is not critical. In general, the amount should not be so high as to cause the dispersion itself or the mixture with the nitrogen-containing polymer to be unstable, or so low that the coating composition does not provide sufficient water and rub resistance or that the dispersion itself becomes unstable. The anionic polyurethane can be present in the aqueous anionic polyurethane dispersion in any range of values inclusive of those stated above.

A variety of known water-dispersible cation polyurethanes can be used as the cationic polyurethane dispersion in the embodiments of the present invention. Suitable non-limiting examples of cationic polyurethanes are available commercially from Crompton Corporation under the tradename Witcobond, for example, Witcobond W-213 and W-215 formulations.

The cationic polyurethane can be prepared by methods known in the art. United States Patent 3,470,310 discloses the preparation of a water dispersion of a polyurethane which contains salt-type groups connected into the polyurethane. United States Patent 3,873,484 discloses an aqueous dispersion of a polyurethane prepared from quaternized polyurethane prepolymer prepared by reacting an alkoxylated diol, an N-alkyl dialkanolamine, an organic diisocyanate and quaternizing with a dialkyl sulfate quaternizing agent. United States Patent 6,221,954 teaches a method for making a polyurethane prepolymer in which a N-monoalkanol tertiary amine is reacted with an alkylene oxide in the presence of a strong acid to form a polyol salt, which is further reacted with an excess amount of an organic polyisocyanate and chain extended with an active hydrogen-containing compound.

In one non-limiting embodiment, the aqueous cationic polyurethane dispersion for use in the present invention can contain up to 70 wt. %, or up to 65 wt. %, or up to 60 wt. %, or up to 50 wt. % of the cationic polyurethane. In alternate non-limiting embodiments, the aqueous cationic polyurethane dispersion includes at least 1 wt. %, or at least 5 wt. %, or at least 10 wt. %, or at least 20 wt. % of the cationic polyurethane. The amount of cationic polyurethane in the aqueous cationic polyurethane dispersion is not critical. In general, the amount should not be so high as to cause the dispersion itself or the mixture with the nitrogen-containing polymer to be unstable, or so low that the coating composition does not provide sufficient water and rub resistance or that the dispersion itself becomes unstable. The cationic polyurethane can be present in the aqueous cationic polyurethane dispersion in any range of values inclusive of those stated above.

Any known water-dispersible non-ionic polyurethane can be used as the nonionic polyurethane dispersion for use in the present invention. Non-limiting examples of suitable cationic polyurethanes are available commercially from Crompton Corporation under the tradename Witcobond, for example, Witcobond W-230 formulation.

The nonionic polyurethane can be prepared by a method known in the art. For example, Szycher (i.e., "Szycher's Book of Polyurethanes" by Michael Szycher, CRC Press, New York, NY, 1999, pages 14-10 through 14-15) describes the preparation of water dispersions of polyurethanes, which contain hydrophilic polyether-type groups either branching off or terminating on the main polyurethane chains. Polyethylene oxide units (having a molecular weight (MW) of from 200 to 4,000) are typically used as dispersing sites. Nonionic polyurethanes can be prepared by the use of diols or diisocyanate comonomers bearing pendant polyethylene oxide chains.

In alternate non-limiting embodiments of the present invention, the aqueous nonionic polyurethane dispersion can contain up to 70 wt. %, or up to 65 wt. %, or up to 60 wt. %, or up to 50 wt. % of the nonionic polyurethane. The aqueous nonionic polyurethane dispersion includes at least 1 wt. %, or at least 5 wt. %, or at least 10 wt. %, or at least 20 wt. % of the nonionic polyurethane. The amount of nonionic polyurethane in the aqueous nonionic polyurethane dispersion is not critical. In general, the amount should not be so high as to cause the dispersion itself or the mixture with the nitrogen-containing polymer to be unstable, or so low that the coating composition does not provide sufficient water and rub resistance or that the dispersion itself becomes unstable. The nonionic polyurethane can be present in the aqueous nonionic polyurethane dispersion in any range of values inclusive of those stated above.

In a non-limiting embodiment of the present invention, the cationic nitrogen-containing polymeric dye fixative material which is at least partially dissolved in an aqueous medium, has a pH of less than 7, or less than 6, or less than 5. A pH value within this range allows for at least a portion of the nitrogen atoms to carry at least a portion of a cationic charge. The resulting coating composition will have a pH of less than 7, or less than 6, or less than 5.

A dye fixative is generally used to at least partially fix dyes to a substrate to preclude the dyes from bleeding or migrating out of the substrate when the substrate is contacted with water.

A variety of known cationic nitrogen-containing polymers within the above-mentioned pH range of the coating composition, can be used in the present coating composition as a dye fixative. Non-limiting examples of suitable cationic nitrogen-containing polymers include cationic polymers having one or more monomer residues derived from one or more of the following nitrogen-containing monomers: 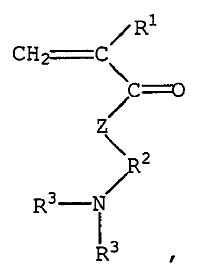 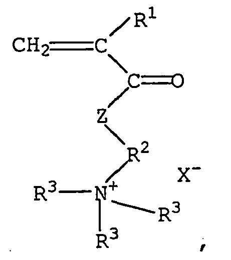 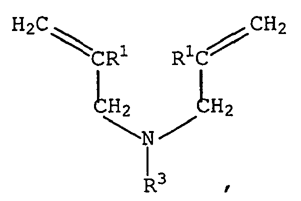 and 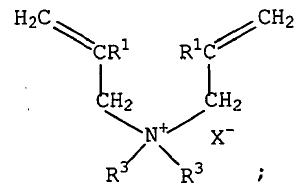 where R¹ represents independently for each occurrence in each structure, H or C₁ to C₃ aliphatic; R² represents independently for each structure a divalent linking group selected from C₂ to C₂₀ aliphatic hydrocarbon, polyethylene glycol and polypropylene glycol; R³ represents independently for each occurrence in each structure H, C₁ to C₂₂ aliphatic hydrocarbon or a residue from the reaction of the nitrogen with epichlorohydrin; Z is selected from -O- or -NR⁴-, where R⁴ is H or CH₃; and X is a halide or methylsulfate.

Non-limiting examples of nitrogen-containing monomers used to prepare polymeric dye fixative materials of the present invention containing the corresponding monomer residue or resulting monomer residues include dimethyl aminoethyl (meth)acrylate, (meth)acryloyloxyethyl trimethyl ammonium halides, (meth)acryloyloxyethyl trimethyl ammonium methylsulfate, dimethyl aminopropyl (meth)acrylamide, (meth)acrylamidopropyl trimethyl ammonium halides, aminoalkyl (meth)acrylamides where the amine is reacted with epichlorohydrin, (meth)acrylamidopropyl trimethyl ammonium methylsulfate, diallyl amine, methyl diallyl amine, and diallyl dimethyl ammonium halides.

In alternate non-limiting embodiments, additional monomers can also be used in preparing the cationic nitrogen-containing polymers containing the corresponding monomer residue. The additional monomer residues can be obtained from any polymerizable ethylenically unsaturated monomer that, when copolymerized with the nitrogen-containing monomers is adapted to provide a the resulting polymer that is at least partially soluble in water. As used herein and the claims, "partially soluble" refers to at least 0.1 gram of the polymer dissolving in deionized water when ten (10) grams of the polymer is added to one (1) liter of water and sufficiently mixed for 24 hours.

Non-limiting examples of monomers that can be copolymerized with the nitrogen-containing monomers include (meth)acrylamide, n-alkyl (meth)acrylamides, (meth)acrylic acid, alkyl esters of (meth)acrylate, glycol esters of (meth)acrylic acid, polyethylene glycol esters of (meth)acrylic acid, hydroxyalkyl (meth)acrylates, itaconic acid, alkyl ethers of itaconic acid, maleic acid, mono- and di-alkyl esters of maleic acid, maleic anhydride, maleimide, aconitic acid, alkyl esters of aconitic acid, allyl alcohol and alkyl ethers of allyl alcohol.

In one non-limiting embodiment, the cationic nitrogen-containing polymer is a homopolymer of a nitrogen-containing monomer, or a copolymer of one or more nitrogen-containing monomers. In another one non-limiting embodiment, the nitrogen-containing polymer is a copolymer of one or more polymerizable ethylenically unsaturated monomers and one or more nitrogen containing monomers. In alternate non-limiting embodiments, when the nitrogen-containing polymer includes any of the aforementioned additional polymerizable ethylenically unsaturated comonomers, the nitrogen-containing polymer can include not more than 70 mol %, or not more than 50 mol %, or not more than 25 mol %, or not more than 10 mol % of the nitrogen-containing monomer. The amount of nitrogen-containing monomer can be dependent upon the specific polyurethane used in the present coating composition. When the amount of the nitrogen-containing monomer used in the nitrogen-containing polymer is too high, an unstable mixture of the nitrogen-containing polymer and polyurethane dispersion can result.

In alternate non-limiting embodiments, when the nitrogen-containing polymer includes any of the aforementioned additional polymerizable ethylenically unsaturated comonomers, the nitrogen-containing polymer can include at least 0.1 mol%, or at least 1.0 mol%, or at least 2.5 mol%, or at least 5.0 mol % of the nitrogen-containing monomer. When the amount of nitrogen-containing monomer in the nitrogen-containing polymer is too low (i.e., less than 0.1 mol%), the nitrogen-containing polymer cannot provide adequate dye fixative properties and a recorded ink image on the coated substrate can lack water and rub fastness properties.

The nitrogen-containing monomers can be present in the nitrogen-containing polymer in any range of values inclusive of those stated above. The additional polymerizable ethylenically unsaturated monomers will be present in an amount such that the total percentage is 100 mol %.

In alternate non-limiting embodiments of the present invention, the aqueous solution of the cationic nitrogen-containing polymeric dye fixative can include at least 5 wt. %, or at least 10 wt. %, or at least 15 wt. % of the nitrogen-containing polymer; and not more than 50 wt. %, or not more than 45 wt. %, or not more than 40 wt. % of the nitrogen-containing polymer. When the concentration of the nitrogen-containing polymer is too low, it is not economical for commercial applications and can be too dilute to provide optimum ratios with the polyurethane. When the concentration is too high, the solution can be too viscous to easily handle in a commercial environment. Non-limiting examples of cationic nitrogen-containing polymers useful in the present invention are solutions of polyamide amines reacted with epichlorohydrin, available under the trade name CinFix from Stockhausen GmbH & Co. KG, Krefeld, Germany.

The microporous substrate coating composition for use in the present invention includes a mixture of an aqueous solution of a cationic nitrogen-containing polymer and an aqueous polyurethane dispersion. The mixture comprises from 10 wt.% to 70 wt.%, or from 20 wt. % to 60 wt. %, or from 30 wt. % to 50 wt. % of an aqueous polyurethane dispersion. In alternate non-limiting embodiments, the mixture comprises from 30 wt. % to 90 wt. %, or from 40 wt. % to 80 wt. %, or from 50 wt. % to 70 wt. % of an aqueous solution of the cationic nitrogen-containing polymer. The weight percentages are based on the total weight of the microporous substrate coating composition.

In one non-limiting embodiment of the present invention, water can be added to the mixture of the cationic nitrogen-containing polymer and the polyurethane. When water is added to the mixture, the resulting microporous substrate coating composition has a total resin solids of from 1 wt. % to 35 wt. %, or from 1 wt. % to 20 wt. %, or from 1 wt. % to 10 wt. % based on the total weight of the microporous substrate coating composition. When the total resin solids is too high, the viscosity of the coating composition can be such that poor penetration of the coating composition results. When the total resin solids is too low, the viscosity of the coating composition can be such that poor coating to the substrate results. In one non-limiting embodiment, the viscosity of the coating composition of the present invention is less than 500 cps, or less than 400 cps; and at least 10 cps, or at least 25 cps when measured using a Brookfield viscometer (RVT, spindle no. 1, 50 rpm at 25°C). Although the viscosity can vary outside of the aforementioned ranges, a viscosity within the aforementioned ranges provides for the coating composition to wet the substrate while maintaining a degree of porosity in the final coated substrate.

In one non-limiting embodiment, the coating composition for use in the present invention comprises a co-solvent. Any co-solvent known in the art can be used. Non-limiting examples of suitable co-solvents include lower alkyl alcohols, n-methylpyrrolidone, Dowanol PM, toluene, and glycol ethers.

The coating composition of the microporous substrate used in the present invention can comprise other additives typically known in the art. Non-limiting examples of such additives include surfactants, such as nonionic, cationic, anionic, amphoteric and zwiterionic surfactants; rheology modifiers, such as polyvinyl alcohols, polyvinyl pyrrolidones, polyethylene oxides, polyacrylamides, natural and synthetic gums; biocides, such as a blend of 5-chloro-2-methyl-4-isothiazoline-3-one and 2-methyl-4-isothiazolin-3-one available commercially by the trade name Kathon, from Rohm and Haas Co., 2-hydroxypropylmethane thiosulfonate, and dithiocarbamates; and coupling agents, such as titanium, silane-type, trisodium pyrophosphate.

Although the pH of the coating composition of the present invention can vary, in alternate non-limiting embodiments, the pH of the coating composition is generally less than 7, or less than 6, or less than 5. When the pH is outside of these ranges, the cationic polymeric dye fixative material can not carry a sufficient cationic charge to perform its intended function. Further, the wetting action of the coating composition can be improved when the pH is within the aforementioned ranges. In one non-limiting embodiment, the coating composition has pH greater than 2.

The coating composition can be prepared by methods known in the for microporous substrates. In one non-limiting embodiment of the present invention, the substrate coating composition is prepared by a method which includes the addition of the aqueous solution of a cationic nitrogen-containing polymer into an aqueous polyurethane dispersion. Sufficient mixing is maintained during the addition to ensure that a homogeneous mixture results. It has been observed that when the aqueous anionic polyurethane dispersion is added to the aqueous solution of a cationic nitrogen-containing polymer, coagulation occurs and a homogeneous mixture is not obtained.

The coating composition used in the present invention can be applied to the ink jet recordable substrate using any method that is known in the art. In one non-limiting embodiment, the method comprises:
(a) providing an microporous substrate having a top surface and a bottom surface;
(b) providing the coating composition described above; and
(c) at least partially applying the coating composition to at least one surface of the microporous substrate.

The thickness of the at least partially coated microporous substrate can vary. In alternate non-limiting embodiments of the present invention, the at least partially coated microporous substrate generally has a thickness of at least 2.54 µm (0.1 mils), or from 12.4 µm-2.54 mm (0.5 to 100 mils), or from 25.4-1270 µm (1 to 50 mils) and in some cases from 101.6-355.6 µm (4 to 14 mils). When the at least partially coated microporous substrate has a thickness which exceeds the aforementioned ranges, it can not feed properly through an ink jet printer. When the at least partially coated microporous substrate is below the stated ranges, it can not have sufficient strength for its intended use.

Any method known in the art can be used to apply the coating composition to the microporous substrate such as flexography, spraying, air knife coating, curtain coating, dipping, rod coating, blade coating, gravure, reverse roll, roller application, imbibing, size press, printing, brushing, drawing, slot-die coating, and extrusion.

Following application of the coating composition to said substrate, the, solvent is removed from the applied coating by any conventional drying technique. In one non-limiting embodiment, the coating is dried by exposing the coated substrate to a temperature ranging from ambient to 177°C (350°F).

The coating composition can be at least partially applied at least one time to at least one surface of the substrate. When the coating composition is applied more than one time, the applied coating is usually but not necessarily dried, either partially or totally, between coating applications.

When the coating composition is at least partially applied to a microporous substrate, in one non-limiting embodiment, the coating composition can penetrate at least partially into the substrate. At least partial penetration of the coating into the microporous substrate can improve the ink jet print quality on the coated substrate. In one non-limiting embodiment, the coating can at least partially penetrates into at least the first one (1) µm of the surface of the microporous substrate. In alternate non-limiting embodiments, the coating can at least partially penetrate into at least the first ten (10) µm or at least the first twenty (20) µm or at least the first thirty (30) µm of the microporous substrate.

The coating composition can be applied to the substrate by a variety of known techniques. In one non-limiting embodiment of the present invention, the coating composition can be applied to the substrate using an air knife coating technique where the excess coating is 'blown off' by a powerful jet from the air knife. In another one non-limiting embodiment, a reverse roll coating method is used. In this procedure, the coating composition is measured onto an applicator roller by precision setting of the gap between an upper metering roller and the application roller below it. The coating is wiped-off the application roller by the substrate as it passes around the support roller at the bottom.

In another one non-limiting embodiment of the present invention, gravure coating can be used to apply the coating composition. In the gravure coating method, an engraved roller runs in a coating bath, which fills the engraved dots or lines of the roller with the coating composition. Any excess coating on the roller is wiped off by a doctor blade and the coating is deposited onto the substrate as it passes between the engraved roller and a pressure roller. Reverse gravure coating methods can be used. In this method, the coating composition is metered by the engraving on a roller before being wiped off as in a conventional reverse roll coating process.

In a further non-limiting embodiment a metering rod can be used to apply the coating composition. When a metering rod is used, an excess of the coating is deposited onto the substrate as it passes over a bath roller. The wire-wound metering rod, sometimes known as a Meyer Bar, allows the desired quantity of the coating to remain on the substrate. The quantity is determined by the diameter of the wire used on the rod.

The amount of the substantially dry coating applied to the substrate, or "coat weight", is typically measured as coating weight per coated area. The coat weight can vary widely. In alternate non-limiting embodiments, it can be at least 0.001 g/m², or at least 0.01 g/m², and in some cases at least 0.1 g/m². In alternate non-limiting embodiments, the coat weight is not more than 50 g/m², or not more than 40 g/m², and in some cases not more than 35 g/m². The coat weight can vary between any of the stated amounts.

In non-limiting embodiments, the substantially dried coating includes the polyurethane at from 10 to 70 percent, or from 20 to 60 percent, and in some cases from 30 to 55 percent by weight of the coating and the nitrogen-containing polymer at from 30 to 90 percent, or from 40 to 80 percent, and in some cases from 45 to 70 percent by weight of the coating. The amount of each component in the substantially dried coating can be determined by the amount of each used to prepare the coating composition.

As used herein and in the claims, "substantially dry" is used to refer to the coating that feels dry to touch.

The microporous substrate can be printed with a wide variety of printing inks using a wide variety of printing processes. Both the printing inks and the printing processes are themselves conventional and known in the art. In a non-limiting embodiment, the microporous substrate of the present invention can be used as an ink jet recordable substrate for ink jet printing. Printing can be accomplished prior to assembly of the microporous material into multilayer articles of the present invention or following the assembly of such multilayer articles.

In the present invention, the substantially water-resistant, at least partially coated, microporous substrate is connected to at least one application of a substantially nonporous material. As used herein and the claims the term "substantially nonporous material" refers to a material which is generally impervious to the passage of liquid, gas, and bacteria. On a macroscopic scale, a substantially nonporous material exhibits few if any pores. As previously mentioned, used herein and the claims, the term "pore(s)" refers to a minute opening(s) through which matter passes. Substantially nonporous materials for use in the present invention may vary widely and can comprise those materials customarily recognized and employed for their known barrier properties. Non-limiting examples of such materials include substantially nonporous thermoplastic polymers, substantially nonporous metalized thermoplastic polymers, substantially nonporous thermoset polymers, substantially nonporous elastomerics, and substantially nonporous metals. The substantially nonporous material can be in the form of a sheet, film, or foil, or other shapes can be used when desired, such as for example, plates, bars, rods, tubes, and forms of more complex shape. In one non-limiting embodiment, the substantially nonporous material for use in the present invention can be in the form or a sheet, film or foil.

As used herein and the claims, the term "thermoplastic polymer" refers to a polymer that can be softened by heat and then regain its original properties upon cooling. The term "thermoset polymer" as used herein and the claims refers to a polymer that solidifies or sets on heating and cannot be remelted.

Non-limiting examples of thermoplastic polymeric materials which are suitable for use include polyethylene, high density polyethylene, low density polyethylene, polypropylene, poly(vinyl chloride), saran, polystyrene, high impact polystyrene, nylons, polyesters such as poly(ethylene terephthalate), copolymers of ethylene and acrylic acid, copolymers of ethylene and methacrylic acid, and mixtures thereof. If desired, all or a portion of the carboxyl groups of carboxyl-containing copolymers can be neutralized with sodium, zinc, or the like. A non-limiting example of a metalized thermoplastic polymeric material is aluminized poly(ethylene terephthalate.

Non-limiting examples of thermoset polymeric materials include thermoset phenol-formaldehyde resin, thermoset melamine-formaldehyde resin, and mixtures thereof.

Non-limiting examples of elastomeric materials include natural rubber, neoprene, styrene-butadiene rubber, acrylonitrile-butadiene-styrene rubber, elastomeric polyurethanes, and elastomeric copolymers of ethylene and propylene.

Non-limiting examples of metals include iron, steel, copper, brass, bronze, chromiu, zinc, die metal, aluminum, and cadmium. Most often the metals employed are alloys and thermoset polymers that can be used in the present invention include a wide variety of polymers known in the art.

The multilayer article of the present invention can be constructed using a wide variety of known methods for connecting at least one layer of a microporous substrate with at least one layer of a substantially nonporous material. In one non-limiting embodiment, at least one layer of a substantially water-resistant, at least partially coated microporous substrate can be fusion bonded to at least one layer of a substantially nonporous material. The microporous substrate generally comprises opposed major surfaces which are characteristic of sheets, films, foils, and plates. The resulting multilayer article can comprise one layer or more than one layer of the microporous substrate and one layer or more than one layer of the substantially nonporous material. In one non-limiting embodiment, at least one exterior layer is the microporous substrate. In an alternate non-limiting embodiment, the microporous substrate can be an ink jet recordable substrate.

In one non-limiting embodiment, the multilayer article of the present invention can be produced by fusion bonding in the absence of an adhesive. Fusion bonding can be accomplished using conventional techniques such as sealing through use of heated rollers, heated bars, heated plates, heated bands, heated wires, flame bonding, radio frequency (RF) sealing, and ultrasonic sealing. Solvent bonding can be used where the substantially nonporous substrate is at least partially soluble in the applied solvent to the extent that the surface becomes tacky. The microporous substrate can be contacted with the tacky surface, and the solvent is then removed to form the fusion bond. In a non-limiting embodiment, foamable compositions can be foamed in contact with the microporous substrate to form a fusion bond between the foam and the substrate. Films or sheets of nonporous substrate can be extruded and while still hot and tacky, contacted with the microporous substrate to form a fusion bond. The fusion bond can be permanent or peelable, depending upon the known bonding technique and/or the nature of the substantially nonporous substrate employed.

In one non-limiting embodiment, heat sealing is used to fusion bond the microporous substrate to the substantially nonporous material. In general, heat sealing includes inserting the microporous substrate into standard heat sealing equipment which is known in the art. In one non-limiting embodiment, the microporous substrate is inserted in conjunction with the substantially nonporous material which can be a thermoplastic and/or thermoset polymer. Heat and/or pressure can be applied to the substrate/polymer construction for a period of time. The amount of heat and/or pressure and length of time can vary widely. In general, the temperature, pressure and time are selected such that the substrate and polymer are at least partially connected together to form a multilayer article. A typical temperature can be within the range of from 38°C-204°C (100°F to 400°F). A typical pressure can be within the range of from 0.34-17.23·10⁵ Pa (5 psi to 250 psi) and a typical period of time can be in the range of from one (1) second to thirty (30) minutes. The multilayer article can then be cooled while under pressure for a typical period of time, such as thirty (30) minutes. Although the strength of the bond formed between the substrate and polymer can vary, the strength can be such that it generally exceeds the tensile properties of the substrate alone.

In one non-limiting embodiment, the substantially nonporous substrate can be polyvinyl chloride.

In one non-limiting embodiment, the microporous substrate employed in the present invention can be at least partially connected to a nonporous substrate such as polyethylene and polypropylene by heat sealing in the absence of an extrinsic adhesive. The resultant fusion bond is ordinarily sufficiently strong which is surprising inasmuch as the lamination of materials to polyolefins is usually difficult unless special adhesives are used.

In one non-limiting embodiment, the microporous substrate can be substantially continuously at least partially connected to the substantially nonporous substrate, or it can be discontinuously at least partially connected to the substantially nonporous substrate. Non-limiting examples of discontinuous bonds include bonding areas in the form of one or more spots, patches, strips, stripes, chevrons, undulating stripes, zigzag stripes, open-curved stripes, closed-curved stripes, irregular areas, and the like. In an alternate non-limiting embodiment, when patterns of bonds are involved, they can be random, repetitive, or a combination of both.

In another one non-limiting embodiment, a microporous substrate can be connected to a substantially nonporous material in the presence of an adhesive. The adhesive for use in the present invention can be selected from a wide variety of adhesives known in the art. Non-limiting examples of suitable adhesives include those having a sufficient molecular weight and viscosity such that the adhesive will not substantially migrate into or substantially penetrate the microporous substrate. Migration or penetration of the adhesive into the substrate can reduce the tack and bond strength of the adhesive. Non-limiting examples of suitable adhesives for use in the present invention include but are not limited to polyvinyl acetate, starches, gums, polyvinyl alcohol, animal glues, acrylics, epoxies, polyethylene-containing adhesives, and rubber-containing adhesives. The adhesive can be applied to the substrate, or to the substantially nonporous material, or to both the substrate and the substantially nonporous material. Further, the adhesive can be introduced via the use of a tie carrier coating.

The process of bonding the substrate and substantially nonporous material in the presence of an adhesive generally includes inserting the substrate/adhesive/material construction into standard processing equipment which is known in the art. Heat and/or pressure can be applied to the substrate/adhesive/material construction for a period of time. The amount of heat and/or pressure and length of time can vary widely. In general, the temperature, pressure and time are selected such that the substrate and substantially nonporous material are at least partially connected together to form a multi-layer article. A typical temperature can be within the range of from 38°C-204°C (100°F to 400°F). A typical pressure can be within the range of from 0.34-17.23·10⁵ Pa (5 psi to 250 psi), and a typical period of time can be in the range of from one (1) second to thirty (30) minutes. The multilayer article may then be cooled under pressure for a typical time period, such as thirty (30) minutes. Although the strength of the bond formed between the microporous substrate and the substantially nonporous material can vary, the bond is generally such that it typically exceeds the tensile properties of the substrate alone.

In one non-limiting embodiment of the present invention, a microporous substrate can be molded using conventional molding techniques known in the art. The substrate can be molded in the presence or the absence of a substantially nonporous material, such as a thermoplastic and/or thermoset polymer. In general, the microporous substrate is inserted into standard molding equipment which is known in the art. In one non-limiting embodiment, a thermoplastic and/or thermoset polymer is introduced onto the substrate and then the substrate/polymer construction is inserted into the mold cavity. In another one non-limiting embodiment, the substrate is placed into the mold cavity and then the thermoplastic and/or thermoset polymer is introduced onto the substrate. Heat and/or pressure can be applied to the substrate/polymer construction for a period of time. The amount of heat and/or pressure and length of time can vary widely. In general, the temperature, pressure and time are selected such that the substrate and polymer are at least partially connected together to form a multi-layer article. A typical temperature can be within the range of from 38°C-204°C (100°F to 400°F). In a non-limiting embodiment, wherein the polymer comprises a thermoplastic polymer, the substrate/polymer construction can be heated to a temperature that equals or exceeds the melt temperature of the thermoplastic polymer. In one non-limiting embodiment, where the thermoplastic polymer can be amorphous, the substrate polymer construction can be heated to a temperature that equals or exceeds the Vicat temperature. In an alternative non-limiting embodiment, wherein the polymer comprises a thermoset polymer, the temperature can be below the curing or crosslinking temperature of the polymer. A typical pressure can be within the range of from 0.34-17.23·10⁵ Pa (5 psi to 250 psi), and a typical period of time can be in the range of from one (1) second to fifteen (15) minutes. The result of a typical molding process is a re-shaping of the original article. The re-shaping is generally defined by the design of the mold cavity. Thus, in a standard molding process, a two-dimensional flat sheet can be re-shaped into a three-dimensional article.

In one non-limiting embodiment of the present invention, the microporous substrate comprises Teslin which is available from PPG Industries, Incorporated in Pittsburgh, PA. The thickness of the microporous substrate of the present invention varies widely depending on the application for use. In one non-limiting embodiment, the microporous substrate can be from 127-508 µm (5 to 20 mils) thick.

In general, the multilayer article of the present invention can be produced employing a variety of molding and laminating procedures known in the art, which include but are not limited to compression molding, rotational molding, injection molding, calendering, roll/nip laminating, thermoforming, vacuum forming, extrusion coating, continuous belt laminating, and extrusion laminating.

In one non-limiting embodiment, other tie coatings known in the art can be used in conjunction with the substrate and the substantially nonporous material.

The multilayer article of the present invention has many and varied uses including gaskets, cushion assemblies, signs, cards, printing substrates, substrates for pen and ink drawings, maps (particularly maritime maps), book covers, book pages, wall coverings, and seams, joints, and seals of breathable packages.

The multilayer article of the present invention can be useful for the purpose of decorating or identifying the substantially nonporous material, or imparting to the substantially nonporous material unique properties of the substrate surface. The ink jet recordable substrate can be decorated with a variety of methods including: offset/lithographic printing, flexographic printing, painting, gravure printing, inkjet printing, electrophotographic printing, sublimation printing, thermal transfer printing, and screen printing. Decorating can also include applying a single or multilayer coating to the ink jet recordable substrate via normal coating methods known in the art. In general, the unique properties that an ink jet recordable substrate can impart on a substantially nonporous material include, but are not limited to one or more of: improved surface energy, increased porosity, decreased porosity, increased bond strength of post coat layer, and modification of the polymer's surface texture or pattern.

Polymer processing techniques are disclosed in U.S. Patent No. 4,892,779.

The present invention is more particularly described in the following examples, which are intended to be illustrative only, since numerous modifications and variations therein will be apparent to those skilled in the art. Unless otherwise specified, all parts and percentages are by weight.

### EXAMPLES

### Example 1 - Thermal Lamination

A sheet of TS 1000 (which was available from PPG Industries, Incorporated, under the trade name Teslin) measuring 8.5 x 11 inches was cut from a master roll. The Teslin sheet was coated using four (4) passes on each side. The coating composition used to coat the Teslin was prepared by first diluting a 31 % solids anionic polyurethane sold under the trade name WitcoBond 234 (available from Crompton Corporation, Greenwich, Connecticut), to 12.3 % solids in a stainless steel mix tank under high speed mixing with an overhead mixer. In a separate feed tank a 55 % solids solution of a polyamide amine reacted with dimethylamine and epichlorohydrin (available under the trade name CinFix NF by Stockhausen GmbH & Co. KG, Drefeld, Germany), was diluted to 7.7% solids and then subsequently added to the diluted anionic polyurethane dispersion, at a 50/50 volume ratio, and the mixture was mixed for 15 minutes. The pH was adjusted to 5.0 +/- 0.5. The total resin solids of the mixture was 10 %.

The coating composition was applied to the sheet of Teslin (10 mil thick) using flexographic coating technology which included two coating stations containing forced air drying ovens. Each coating station consisted of a coating feed chamber, anilox roll and rubber roll. The coating feed chamber was supplied from a coating holding tank and pump. Only one coating station was used in the preparation of this material. The apparatus was fitted with a 7 bcm (billion µm³) anilox roll, the line speed was 54.86 m/min (180 fpm) (feet per minute), and the oven temperature was 105°C (220°F). Eight (8) passes per roll were made, which corresponds to four (4) passes per surface.

A test print was then printed onto the sheet using an HP1220C color inkjet printer. The printed sheet was laminated using the following lamination peel strength test method. The 215.9 x 279.4 mm (8.5 x 11 inch) sheet of Teslin was covered with an 215.9 x 279.4 mm (8.5 x 11 inch). Sealtran 3/2 laminating film. A 50.8 x 279.4 mm (2 x 11 inch) strip of 9.06 kg 20 lb. bond paper was placed along the center line (in the 279.5 mm (11 inch) direction) on the Teslin. The film to be tested was cut to 215.9 x 279.4 mm (8.5 inch by 11 inch) and placed directly on top of the aforementioned structure. The laminated sheet was cut into a piece 100 x 279.4 mm (4.25 inches by 11 inches). Strips were then cut 25.4 x 108 mm (1 inch by 4.25 inches) using a JDC Precision Sample Cutter (Thwing Albert Instruments). Each strip was placed in a silicone-coated "laminating pocket". The pocket was fed through a pocket laminator large enough to accommodate the pocket. The laminating roll temperature varied within a range of from 275 to 300°F (120-135°C). The laminated samples were then stored at room temperature for at least 24 hours prior to peel testing. The laminating film was peeled back from the Teslin and placed into the top jaw of a tensile tester. The bottom porti was placed into the bottom jaw of the tensile tester. A 180° peel was performed at 12.7 mm/min (0.5 inches/minute) with a sample rate of 4.0 pt./second. The test results showed the initial peel strength was 1.71 kg/cm (9.6 lbs./inch) and demonstrated that the resulting substrate retained its integrity following a 24 hour water soak.

### Example 2 - Thermal Lamination

A sheet of TS 1000 measuring 215.9 x 279.4 mm (8.5 x 11 inches) was cut from a master roll of Teslin. The Teslin had been coated using two (2) passes on each side. The coating composition which was used to coat the Teslin had been prepared using a high shear coating procedure. Under high shear mixing, 61.5 active parts of Witcobond 234 having 31 % solids in water was added at a controlled rate into 38.5 active parts of CinFix NF at 52% solids in water. The resultant Witcobond 234/CinFix NF mixture was reduced to a final mixture of 10% solids by adding water at a controlled rate while continuing the high shear mixing. The procedure used to apply this coating composition to the Teslin was the same as that used in Example 1. Three test patterns (supplied by HP) were printed on the coated Teslin sheet using an HP 1220°C color inkjet printer. The printed sheet was then laminated using the same lamination process as that described in Example 1, with the exception that the pocket laminator had a temperature of 107°C (225°F) and Transilwrap 7/3 KRTY Polyester was used as the laminating film. The laminated sheets were than diecut into 70 ISO 7810 ID-1 cards. The cards exhibited good integrity when laminated. No quantitative testing was performed.

### Example 3 - Hydraulic Platen Lamination

A sheet of TS 1000 measuring 355.6 x 355.6 mm (14 x 14 inches) was cut from a master roll of Teslin. The Teslin had been coated with two (2) passes on each side (2x2) using the same coating composition as used in Example 2 and the same Flexographic coating technology that was used in Example 1. The coated Teslin sheet was then placed on top of two 355.6 x 355.6 mm (14 x 14 inch) sheets of 0.254 mm (0.010 inch) polyvinylchloride (PVC), supplied by Empire Plastics. This construction was placed in a Technical Machine Products (TMP) laminating press. The composite construction was compression laminated at a pressure of 13.8 10⁵ Pa (200 psi) for 10 minutes at a temperature of 93°C (200°F). Following lamination, IS07910 ID-1 cards were diecut from the finished 355.6 x 355.6 mm (14 x 14 inch) construction. The finished cards had good integrity; any attempt to delaminate them destroyed the Teslin layer, which demonstrated a good bond between the Teslin and the PVC in the absence of an adhesive.

### Example 4 - Hydraulic Platen Lamination

A sheet of TS 1000 measuring14 x 14 inches was cut from a master roll of Teslin that was coated with two (2) passes on each side (2x2) using the same coating composition used in Example 2, and the same Flexographic coating technology for application as was used in Example 1. The coated Teslin sheet was placed on top of one sheet of 355.6 x 355.6 mm (14 inch x 14 inch), 0.254 mm (0.010") thick PVC (supplied by Empire Plastics) and one 355.6 x 355.6 mm (14 x 14 inch) sheet of 0.38 mm (0.015") thick PVC. The construction was placed in a Technical Machine Products (TMP) laminating press. The composite construction was compression laminated at a pressure of 12·10⁵ Pa (175 psi) for 10 minutes at a temperature of 85°C (185°F). Following lamination, IS07910 ID-1 cards were diecut from the finished 355.6 x 355.6 mm (14 inch x 14 inch) construction. The finished cards demonstrated good integrity and any attempt to delaminate them destroyed the Teslin layer; demonstrating a good bond between the Teslin and the PVC in the absence of an adhesive.

### Example 5 - Hydraulic Platen Lamination

A sheet of TS 1000 measuring 355.6 x 355.6 mm (14 x 14 inch) was cut from a master roll of Teslin that was coated two (2) passes each side (2x2) using the same coating composition used in Example 2 and the same Flexographic coating technology for applying the coating that was used in Example 1. The coated Teslin sheet was placed on top of one sheet of 355.6 x 355.6 mm (14 inch x 14 inch), 0.254 mm (0.010 inch) thick PVC (supplied by Empire Plastics) and on 355.6 x 355.6 mm (14 inch x 14 inch) sheet of 0.38 mm (0.015) inch thick PVC. This construction was then placed in a Technical Machine Products (TMP) laminating press. The composite construction was compression laminated at a pressure on 12·10⁵ Pa (175 psi) for 5 minutes at a temperature of 85°C (185°F). Following lamination, IS07910 ID-1 cards were diecut from the finished 355.6 x 355.6 mm (14 x 14 inch) construction. The finished cards had good integrity; any attempt to de-laminate them destroyed the Teslin layer, demonstrating a good bond between the PVC and the Teslin in the absence of adhesive.

### Example 6 - Hydraulic Platen Lamination

A (14 inch by 14 inch) sheet of TS1000 was cut from a master roll of Teslin that was coated with two (2) passes each side (2x2) using the same coating composition used in Example 2, and the same Flexographic coating technology for applying said coating composition used in Example 1 The coated Teslin sheet was placed on top of one sheet of 255.6 x 255.6 mm (14 inch by 14 inch), 0.254 mm (0.010 inch) thick PVC (supplied by Empire Plastics) and one 255.6 x 255.6 mm (14 inch by 14 inch) sheet of 0.38 mm (0.015 inch) thick PVC. This construction was placed in a Technical Machine Products (TMP) laminating press. The composite construction was then compression laminated at a pressure of 12·10⁵ Pa (175 psi) for 4 minutes at a temperature of 79°C (175°F). Following lamination, ISO7910 ID-1 cards were diecut from the finished 255.6 x 255.6 mm (14 inch by 14 inch) construction. The finished cards were then separated, demonstrating lack of good bond between Teslin and PVC.

### Example 7 - Hydraulic Platen Lamination (One Composite Sheet/Book)

A Teslin sheet measuring 577.85 x 704.85 mm (22.75 x 27.75 inches), 254 µm (10mils) thick, was cut from a master roll in the grain long direction. The Teslin had been coated with three (3) passes on each side (3x3) using the same coating composition and Flexographic coating technology described in Example 2. The coated Teslin sheet was placed on top of one 577.85 x 704.85 mm (22.75 x 27.75 inch) sheet of 0.51 mm (0.020-inch) polyvinylchloride (Klockner PVC 280/09 copolymer). The PVC sheet was cut in the grain long direction. A sheet of 50.8 µm (2-mil) clear polyester measuring 609.6 x 762 mm (24 x 30 inch) was placed over the Teslin sheet to act as a release liner. The release liner was removed from the composite sheet following lamination and was not part of the final composite sheet. This construction was placed between two 609.6 x 762 mm (24 inch x 30 inch) x 3.18 mm (125 mil) polished stainless steel metal plate. This entire construction was placed in a 200-Ton Wabash laminating press, preheated to 121°C (250°F). The composite construction was compression laminated at a pressure of 12·10⁵ Pa (175 psi) for 12 minutes at a temperature of 121°C (250°F). While under pressure, the platens were cooled to less than 38°C (100°F), which took approximately 20 minutes. After being removed from the press, the resultant composite sheet was removed from the stack construction. The finished composite sheet had good integrity; any attempt to delaminate destroyed the Teslin layer, which demonstrated a good adhesive and seamless bond between the Teslin and the PVC. ISO7910 ID-1 cards were die cut from the resultant 577.85 x 704.85 mm (22.75-inch x 27.75-inch) x 0.74 mm (29.0 mil) composite sheet. The finished cards had good integrity and good lat flat. Any attempt to delaminate destroyed the Teslin layer, which demonstrated a good adhesive and seamless bond between the Teslin and the PVC.

### Example 8 - Hydraulic Platen Lamination (Two Composite Sheets/Book)

A sheet of Teslin measuring 577.85 x 704.85 mm (22.75 x 27.75 inch) of treated Teslin substrate, 10 mils thick, was cut from a master roll in the grain long direction. The Teslin had been coated with three (3) passes on each side (3x3) using the same coating composition and Flexographic coating technology described in Example 2. The coated Teslin sheet was placed on top of a 577.85 x 704.85 mm (22.75 x 27.75-inch) sheet of 0.51 mm (0.020-inch) polyvinylchloride (Klockner PVC 280/09 copolymer). The PVC sheet was cut in the grain long direction. A sheet of 2-mil clear polyester measuring 609.6 x 762 mm (24-inch x 30-inch) was placed over the Teslin sheet to act as a release liner. The release liner was removed from the composite sheet following lamination and was not an integral part of the final composite sheet. This construction was placed between two 609.6 x 762 mm (24 inch x 30 inch) x 3.18 mm (125 mil) polished stainless steel metal plate. An identical polyester/treated Teslin sheet/PVC lay-up was placed on top of a stainless plate from the existing construction. A polished metal plate was placed over the exposed polyester release liner. This entire construction was placed in a 200-Ton Wabash laminating press, preheated to 121°C (250°F). The composite construction was compression laminated at a pressure of 12·10⁶ Pa (175 psi) for 12 minutes at a temperature of 121°C (250°F). While under pressure, the platens were cooled to less than 38°C (100°F) which took approximately 20 minutes. After being removed from the press, the resultant composite sheets were removed from the stack construction. The finished composite sheets had good integrity; any attempt to delaminate destroyed the Teslin layer, which demonstrated a good adhesive and seamless bond between the Teslin and the PVC. ISO7910 ID-1 cards were die cut from the resultant 577.85 x 704.85 mm (22.5 inch x 27.5 inch) x 0.74 mm (29.0 mil) composite sheet. The finished cards had good integrity and good lat flat. Any attempt to delaminate destroyed the Teslin layer, which demonstrated a good adhesive and seamless bond between the Teslin and the PVC.

### Example 9 - Hydraulic Platen Lamination (Four Composite Sheets/Book)

A sheet of Teslin measuring 577.85 x 704.85 mm (22.75 x 27.75) inches), 254 µm 10 mils thick, was cut from a master roll in the grain long direction. The Teslin had been coated with three (3) passes on each side (3x3) using the same coating composition and Flexographic coating technology described in Example 2. A coated Teslin sheet was placed on top of a 577.85 x 704.85 mm (22.75 x 27.75 inch) sheet of 0.51 mm (0.020-inch) polyvinylchloride (Klockner PVC 280/09 copolymer). The PVC sheet was cut in the grain long direction. A 2-mil sheet of clear polyester measuring 609.6 x 762 mm (24 x 30 inches) was placed over the Teslin sheet to act as a release liner. The release liner was removed from the composite sheet following lamination and was not part of the final composite sheet. This construction was placed between two 609.6 x 762 mm (24 inch x 30 inch) x 3.18 mm (125 mil) polished stainless steel metal plate. An identical polyester/treated Teslin sheet/PVC lay-up was placed on top of a stainless plate from the existing construction. A polished metal plate was placed over the exposed polyester release liner. The pattern was repeated twice such that four (4) pre-pressed multi-layer ply's existed in the stack. This entire construction was placed in a 200-Ton Wabash laminating press, preheated to 121°C (250°F). The composite construction was compression laminated at a pressure of 12·10⁵ Pa (175 psi) for 12minutes at a temperature of 121°C (250°F). While under pressure, the platens were cooled to less than 38°C (100°F), which took approximately 20 minutes. After being removed from the press, the resultant composite sheets were removed from the stack construction. The finished composite sheets had good integrity; any attempt to delaminate destroyed the Teslin layer, which demonstrated a good adhesive and seamless bond between the Teslin and the PVC. IS07910 ID-1 cards were die cut from the resultant 577.85 x 704.85 mm (22.5-inch x 27.5-inch) x 0.74 mm (29.0 mil) composite sheet. The finished cards had good integrity and good lat flat. Any attempt to delaminate destroyed the Teslin layer, which demonstrated a good adhesive and seamless bond between the Teslin and the PVC.

### Example 10 - Hydraulic Platen Lamination (Four Composite Sheets/Book)

A sheet of Teslin measuring 579.85 x 704.85 mm (22.75 x 27.75 inches), 254 µm (10 mils) thick, was cut from a master roll in the grain long direction. The Teslin had been coated with three (3) passes on each side (3x3) using the same coating composition and Flexographic coating technology described in Example 2. A coated Teslin sheet was placed on top of a 577.85 x 704.85 mm (22.75 x 27.75-inch) sheet of 8.51 mm (0.020-inch) polyvinylchloride (Klockner PVC 280/09 copolymer). The PVC sheet was cut in the grain long direction. A 2-mil sheet of clear polyester measuring 609.6 x 762 mm (24 x 30 inches) was placed over the Teslin sheet to act as a release liner. The release liner was removed from the composite sheet following lamination and was not part of the final composite sheet. This construction was placed between two 609.6 x 762 mm (24 inch x 30 inch) x 3.18 mm (125 mil) polished stainless steel metal plates. An identical polyester/treated Teslin sheet/PVC lay-up was placed on top of a stainless plate from the existing construction. A polished metal plate was placed over the exposed polyester release liner. The pattern was repeated twice such that four (4) pre-pressed multi-layer ply's existed in the stack. This entire construction was placed in a 200-Ton Wabash laminating press, preheated to 121°C (250°F) The composite construction was compression laminated at a pressure of 12·10⁵ Pa (175 psi) for 10 minutes at a temperature of 121°C (250°F). While under pressure, the platens were cooled to less than 38°C (100°F) which took approximately 20 minutes. After being removed from the press, the resultant composite sheets were removed from the stack construction. The finished composite sheets had good integrity; any attempt to delaminate destroyed the Teslin layer, which demonstrated a good adhesive and seamless bond between the Teslin and the PVC. ISO791 ID-1 cards were die cut from the resultant 577.85 x 704.85 (22.5-inch x 27.5-inch) x 0.74 mm (29.0 mil) composite sheet. The finished cards had good integrity and good lat flat. Anyattempt to delaminate destroyed the Teslin layer, which demonstrated a good adhesive and seamless bond between the Teslin and the PVC.

### Example 11 - Hydraulic Platen Lamination (Four Composite Sheets/Book)

A sheet of Teslin substrate measuring 577.85 x 704.85 mm (22.75 x 27.75 inches), 254 µm (10mils) thick, was cut from a master roll in the grain long direction. The Teslin had been coated with three (3) passes on each side (3x3) using the same coating composition and Flexographic coating technology described in Example 2. A coated Teslin sheet was placed on top of one 577.85 x 704.85 mm (22.75-inch x 27.75-inch) sheet of 0.51 mm (0.20-inch) polyvinylchloride (Klockner PVC 280/09 copolymer). The PVC sheet was cut in the grain long direction. A 50.8 µm (2-mil) thick sheet of clear polyester measuring 609.6 x 762 mm (24 x 30 inches) was placed over the Teslin sheet to act as a release liner. The release liner was removed from the composite sheet following lamination and was not part of the final composite sheet. This construction was placed between two 609.6 x 762 mm (24 inch x 30 inch) x 3.18 mm (125 mil) polished stainless steel metal plate. An identical polyester/treated Teslin sheet/PVC lay-up was placed on top of a stainless plate from the existing construction. A polished metal plate was placed over the exposed polyester release liner. The pattern was repeated twice such that four (4) pre-pressed multi-layer ply's existed in the stack. This entire construction was placed in a 200-Ton Wabash laminating press, preheated to 135°C (275°F). The composite construction was compression laminated at a pressure 13.7·10⁵ Pa (200 psi) for 8 minutes at a temperature of 135°C (275°F). While under pressure, the platens were cooled to less than 38°C (100°F) which took approximately 22 minutes. After being removed from the press, the resultant composite sheets were removed from the stack construction. The finished composite sheets had good integrity; any attempt to delaminate destroyed the Teslin layer, which demonstrated a good adhesive and seamless bond between the Teslin and the PVC. ISO7910 ID-1 cards were die cut from the resultant 577.85 x 704.85 x 0.74 mm (22.5-inch x 27.5-inch x 29.0 mil) composite sheet. The finished cards had good integrity and good lat flat. Any attempt to delaminate destroyed the Teslin layer, which demonstrated a good adhesive and seamless bond between the Teslin and the PVC.

### Example 12 - Hydraulic Platen Lamination (Four Composite Sheets/Book)

Sheets 577.85 x 704.85 mm (22.75-inch x 27.75-inch) of Teslin substrate, 254 mm (10 mils) thick, were cut from a master roll in the grain long direction. The Teslin had been coated with 3 passes on each side (3x3) using the same coating composition and Flexographic coating technology described in example 1. One coated Teslin sheet was placed on top of one 577.85 x 704.85 mm (22.75-inch x 27.75-inch) sheet of 0.51 mm (0.020-inch) polyvinylchloride (Klockner PVC 280/09 copolymer). The PVC sheet was cut in the grain long direction. A sheet 557.85 x 704.85 mm (24-inch x 30-inch) of 50.8 mm (2-mil) clear polyester was placed over the Teslin sheet to act as a release liner. (Note! This release liner is removed from the composite sheet following lamination and is not an integral part of the final composite sheet.) This construction was placed between two 609.6 x 762 mm (24" x 30") x 3.18 mm (125mil) polished stainless steel metal plate. An identical polyester/coated Teslin sheet/PVC lay-up was placed on top of a stainless plate from the existing construction. A polished metal plate was placed over the exposed polyester release liner. The pattern was repeated twice more so that four pre-pressed multi-layer ply's existed in the stack. This entire construction was placed in a 200-Ton Wabash laminating press, preheated to 135°C (275°F). The composite construction was compression laminated at a pressure of 13.7·10⁵ (200 psi) for 6minutes at a temperature of 135°C (275°F). While under pressure, the platens were cooled to less than 38°C (100°F), which took approximately 22 minutes. After being removed from the press, the resultant composite sheets were removed from the stack construction. The finished composite sheets had good integrity; any attempt to delaminate destroyed the Teslin layer, which demonstrated a good adhesive and seamless bond between the Teslin and the PVC. ISO7910 ID-1 cards were die cut from the resultant 577.85 x 704.85 x 0.74 mm (22.5-inch x 27.5-inch x 29.0mil) composite sheet. The finished cards had good integrity and good lat flat. Any attempt to delaminate destroyed the Teslin layer, which demonstrated a good adhesive and seamless bond between the Teslin and the PVC.

### Example 13 - Hydraulic Platen Lamination (Four Composite Sheets/Book) - Failed

Sheets 577.85 x 704.85 mm (22.75-inch x 27.75-inch) of Teslin substrate, 254 µm (10mils) thick, were cut from a master roll in the grain long direction. The Teslin had been coated with 3 passes on each side (3x3) using the same coating composition and Flexographic coating technology described in example 1. One coated Teslin sheet was placed on top of one 577.85 x 704.85 mm (22.75-inch x 27.75-inch) sheet of 0.51 mm (0.020-inch) polyvinylchloride (Klockner PVC 280/09 copolymer). The PVC sheet was cut in the grain long direction. A sheet 577.85 x 704.85 mm (24-inch x 30-inch) of 50.8 µm (2-mil) clear polyester was placed over the Teslin sheet to act as a release liner. (Note! This release liner is removed from the composite sheet following lamination and is not an integral part of the final composite sheet.) This construction was placed between two 609.6 x 762 mm x 3.18 mm (24" x 30" x 125mil) polished stainless steel metal plate. An identical polyester/treated Teslin sheet/PVC lay-up was placed on top of a stainless plate from the existing construction. A polished metal plate was placed over the exposed polyester release liner. The pattern was repeated twice more so that four pre-pressed multi-layer ply's existed in the stack. This entire construction was placed in a 200-Ton Wabash laminating press, preheated to 135°C (275°F). The composite construction was compression laminated at a pressure of 13.7·10⁵ Pa (200 psi) for 4minutes at a temperature of 135°C (275°F). While under pressure, the platens were cooled to less than 38°C (100°F), which took approximately 20minutes. After being removed from the press, all four composite sheets were removed from the book. The Teslin/PVC sheets were pealed apart, indicating lack of bond strength. No attempt to fabricate ISO7910 ID-1 cards was made.

### Example 14 - Hydraulic Platen Lamination (Four Composite Sheets/Book)

A sheet of Teslin measuring 577.85 x 704.85 mm (22.75 x 27.75 inches), 254 µm (10mils) thick, was cut from a master roll in the grain long direction. The Teslin had been coated with three (3) passes on each side (3x3) using the same coating composition and Flexographic coating technology described in Example 2. One coated Teslin sheet was placed on top of one 577.85 x 704.85 mm (22.75-inch x 27.75-inch) sheet of 0.64 mm (0.024-inch) polyvinylchloride (Klockner PVC 280/09 copolymer). The PVC sheet was cut in the grain long direction. A sheet 609.6 x 762 mm (24-inch x 30-inch) of 50.8 µm (2-mil) clear polyester was placed over the Teslin sheet to act as a release liner. (Note! This release liner is removed from the composite sheet following lamination and is not an integral part of the final composite sheet.) This construction was placed between two 609.6 x 762 x 3.18 mm (24 inch x 30 inch x 125mil) polished stainless steel metal plate. An identical polyester/treated Teslin sheet/PVC lay-up was placed on top of a stainless plate from the existing construction. A polished metal plate was placed over the exposed polyester release liner. The pattern was repeated twice such that four pre-pressed multi-layer ply's existed in the stack. This entire construction was placed in a 200-Ton Wabash laminating press, preheated to 135°C (275°F). The composite construction was compression laminated at a pressure of 13.7·10⁵ Pa (200 psi) for 8 minutes at a temperature of 135°C (275°F). While under pressure, the platens were cooled to less than 38°C (100°F), which took approximately 22 minutes. After being removed from the press, the resultant composite sheets were removed from the stack construction. The finished composite sheets had good integrity; any attempt to delaminate destroyed the Teslin layer, which demonstrated a good adhesive and seamless bond between the Teslin and the PVC. ISO7910 ID-1 cards were die cut from the resultant 577.85 x 704.85 x 0.84 mm (22.5-inch x 27.5-inch x 33.0mil) composite sheet. The finished cards had good integrity and good lat flat. Any attempt to delaminate destroyed the Teslin layer, which demonstrated a good adhesive and seamless bond between the Teslin and the PVC.

### Example 15 - Hydraulic Platen Lamination (Four Composite Sheets/Book)

A sheet of Teslin measuring 577.85 x 704.85 mm (22.75 x 27.75 inches), 254 µm (10 mils) thick, was cut from a master roll in the grain long direction. The Teslin was coated with three (3) passes on each side (3x3) using the same coating composition and Flexographic coating technology described in example 1. A coated Teslin sheet was placed on top of one 577.85 x 704.85 mm (22.75 x 27.75-inch) sheet of 0.64 mm (0.024-inch) polyvinylchloride (Klockner PVC 280/09 copolymer). The PVC sheet was cut in the grain long direction. A 2-mil sheet of clear polyester measuring 609.6 x 762 mm (24 x 30 inches) was placed over the Teslin sheet to act as a release liner. The release liner was removed from the composite sheet following lamination and was not part of the final composite sheet. This construction was placed between two 609.6 x 762 x 3.18 mm (24"x 30" x 125mil) polished stainless steel metal plate. An identical polyester/treated Teslin sheet/PVC lay-up was placed on top of a stainless plate from the existing construction. A polished metal plate was placed over the exposed polyester release liner. The pattern was repeated twice more so that four pre-pressed multi-layer ply's existed in the stack. This entire construction was placed in a 200-Ton Wabash laminating press, preheated 135°C (275°F). The composite construction was compression laminated at a pressure of 13.7·10⁵ Pa (200 psi for 6minutes at a temperature of 135°C (275°F). While under pressure, the platens were cooled to less than 100°F, which took approximately 22 minutes. After being removed from the press, the resultant composite sheets were removed from the stack construction. The finished composite sheets had good integrity; any attempt to delaminate destroyed the Teslin layer, which demonstrated a good adhesive and seamless bond between the Teslin and the PVC. ISO7910 ID-1 cards were die cut from the resultant 577.85 x 704.85 x 0.84 mm (22.5-inch x 27.5-inch x 33.0mil) composite sheet. The finished cards had good integrity and good lat flat. Any attempt to delaminate destroyed the Teslin layer, which demonstrated a good adhesive and seamless bond between the Teslin and the PVC.

## Claims

1. A multilayer article comprising a microporous substrate at least partially connected to a substantially nonporous material, said microporous substrate at least partially coated with a substantially water-resistant coating composition, said coating composition comprising a stable dispersion of:
(a) an aqueous polyurethane dispersion: and
(b) a cationic nitrogen-containing polymeric dye fixative material at least partially dissolved in an aqueous medium.

2. The multilayer article of claim 1 wherein said microporous substrate comprises:
(a) a polyolefin;
(b) a particulate silica material; and
(c) a porosity wherein the pores constitute at least 35 percent by volume of the microporous substrate.

3. The multilayer article of claim 2 wherein said polyolefin is chosen from polyethylene, polypropylene, and mixtures thereof.

4. The multilayer article of claim 3 wherein said polyethylene comprises an essentially linear high molecular weight polyethylene having an intrinsic viscosity of at least 10 deciliters/gram, and said polypropylene comprises an essentially linear high molecular weight polypropylene having an intrinsic viscosity of at least 5 deciliters/gram.

5. The multilayer article of claim 2 wherein said particulate silica material comprises precipitated silica.

6. The multilayer article of claim 2 wherein said particulate silica material comprises from 50 to 90 percent by weight of said microporous substrate.

7. The multilayer article of claim 2 wherein said pores comprise from 35 percent to 95 percent by volume of said microporous substrate.

8. The multilayer article of claim 1 wherein said aqueous polyurethane dispersion is chosen from aqueous dispersions of anionic polyurethanes, cationic polyurethanes, nonionic polyurethanes and mixtures thereof.

9. The multilayer article of claim 8 wherein said anionic polyurethane is chosen from aromatic polyether polyurethanes, aliphatic polyether polyurethanes, aromatic polyester polyurethanes, aliphatic polyester polyurethanes, aromatic polycaprolactam polyurethanes, aliphatic polycaprolactam polyurethanes, and mixtures thereof.

10. The multilayer article of claim 1 wherein said polymeric dye fixative material comprises a polymer comprising monomer residues derived from one or more nitrogen-containing monomers chosen from: 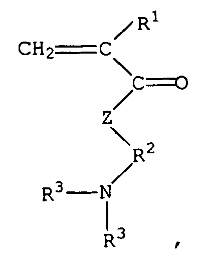 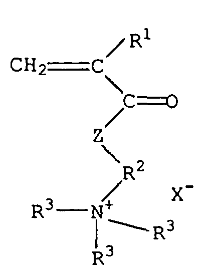 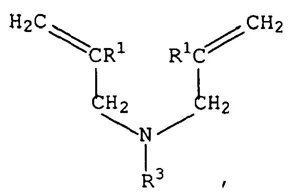 and 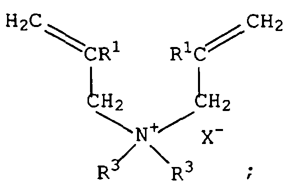 where R¹ represents independently for each occurrence in each structure, H or C₁ to C₃ aliphatic; R² represents independently for each structure a divalent linking group selected from C₂ to C₂₀ aliphatic hydrocarbon, polyethylene glycol and polypropylene glycol: R³ represents independently for each occurrence in each structure H, C₁ to C₂₂ aliphatic hydrocarbon or a residue from the reaction of the nitrogen with epichlorohydrin; Z is selected from -0- or -NR⁴-, where R⁴ is H or CH₃; and X is a halide or methylsulfate.

11. The multilayer article of claim 1 wherein said coating composition has a pH less than 7.

12. The multilayer article of claim 1 wherein said microporous substrate comprises an ink jet recordable substrate.

13. The multilayer article of claim 1 wherein said microporous substrate at least partially coated with said substantially water-resistant coating composition has a thickness of at least 0.1 mils.

14. The multilayer article of claim 1 wherein said substantially nonporous material is chosen from substantially nonporous thermoplastic polymers, substantially nonporous metalized thermoplastic polymers, substantially nonporous thermoset polymers, substantially nonporous elastomerics, substantially nonporous metals and mixtures thereof.

15. The multilayer article of claim 14 wherein said thermoplastic polymers are chosen from polyethylene, high density polyethylene, low density polyethylene, polypropylene, poly(vinyl chloride), saran, polystyrene, high impact polystyrene, nylons, polyesters, copolymers of ethylene and acrylic acid, copolymers of ethylene and methacrylic acid, and mixtures thereof.

16. A multilayer article of claim 14 wherein said thermoset polymers are chosen from thermoset phenol-formaldehyde resin, thermoset melamine-formaldehyde resin, and mixtures thereof.

17. The multilayer article of claim 14 wherein said elastomers are chosen from natural rubber, neoprene, styrene-butadiene rubber, acrylonitrile-butadiene-styrene rubber, elastomeric polyurethanes, elastomeric copolymers of ethylene and propylene, and mixtures thereof.

18. The multilayer article of claim 14 wherein said metals are chosen from iron, steel, copper, brass, bronze, chromium, zinc, die metal, aluminum, cadmium and mixtures thereof.

19. The multilayer article of claim 1 wherein said microporous substrate is at least partially connected to said substantially nonporous material by a fusion bond in the absence of an adhesive.

20. The multilayer article of claim 1 wherein said microporous substrate is at least partially connected to said substantially nonporous material by an adhesive.

21. The multilayer article of claim 20 wherein said adhesive is selected from polyvinyl acetate, starches, gums, polyvinyl alcohol, animal glues, acrylics, epoxies, polyethylene-containing adhesives, rubber-containing adhesives, and mixtures thereof.

22. A method for producing a multilayer article comprising the steps of:
(a) providing a microporous substrate having a top surface and a bottom surface;
(b) providing a substantially water-resistant coating composition comprising a stable dispersion of:
a. an aqueous polyurethane dispersion; and
b. a cationic nitrogen-containing polymeric dye fixative material at least partially dissolved in an aqueous medium;
(c) at least partially applying said coating composition to at least one surface of said microporous substrate:
(d) at least partially connecting said microporous substrate of (c) to a substantially nonporous material.

23. The method of claim 22 wherein said microporous substrate, said coating composition and said substantially non-porous material are defined as in any of claims 2-18.

24. The method of claim 22 wherein said microporous substrate is at least partially connected to said substantially nonporous material as defined in any of claims 19-21.

## Patentansprüche

1. Mehrschichtiger Gegenstand, der ein mikroporöses Substrat, das wenigstens teilweise mit einem im Wesentlichen nichtporösen Material verbunden ist, aufweist, wobei dieses mikroporöse Substrat zumindest teilweise mit einer im Wesentlichen wasserbeständigen Beschichtungszusammensetzung beschichtet ist und diese Beschichtungszusammensetzung eine stabile Dispersion enthält von:
(a) einer wässrigen Polyurethandispersion und
(b) einem kationischen stickstoffhaltigen polymeren Farbstofffixierungsmittel, das wenigstens teilweise in einem wässrigen Medium gelöst ist.

2. Mehrschichtige Gegenstand nach Anspruch 1, wobei dieses mikroporöse Substrat aufweist:
(a) ein Polyolefin,
(b) ein teilchenförmiges Siliciumdioxidmaterial und
(c) eine Porosität, wobei die Poren wenigstens 35 Volumenprozent des mikroporösen Substrats ausmachen.

3. Mehrschichtiger Gegenstand nach Anspruch 2, wobei dieses Polyolefin ausgewählt ist aus Polyethylen, Polypropylen und Mischungen davon.

4. Mehrschichtiger Gegenstand nach Anspruch 3, wobei dieses Polyethylen ein im Wesentlichen lineares Polyethylen mit hohem Molekulargewicht und einer Grenzviskositätszahl von wenigstens 10 dl/g enthält und dieses Polypropylen ein im Wesentlichen lineares Polypropylen mit hohem Molekulargewicht und einer Grenzviskositätszahl von wenigstens 5 dl/g enthält.

5. Mehrschichtiger Gegenstand nach Anspruch 2, wobei dieses teilchenförmige Siliciumdioxidmaterial gefällte Kieselsäure enthält.

6. Mehrschichtiger Gegenstand nach Anspruch 2, wobei dieses teilchenförmige Siliciumdioxidmaterial 50 bis 90 Gewichtsprozent dieses mikroporösen Substrats ausmacht.

7. Mehrschichtiger Gegenstand nach Anspruch 2, wobei diese Poren 35 bis 95 Volumenprozent dieses mikroporösen Substrats ausmachen.

8. Mehrschichtiger Gegenstand nach Anspruch 1, wobei diese wässrige Polyurethandispersion aus wässrigen Dispersionen von anionischen Polyurethanen, kationischen Polyurethanen, nichtionischen Polyurethanen und Mischungen davon ausgewählt ist.

9. Mehrschichtiger Gegenstand nach Anspruch 8, wobei dieses anionische Polyurethan aus aromatischen Polyetherpolyurethanen, aliphatischen Polyetherpolyurethanen, aromatischen Polyesterpolyurethanen, aliphatischen Polyesterpolyurethanen, aromatischen Polycaprolactampolyurethanen, aliphatischen Polycaprolactampolyurethanen und Mischungen davon ausgewählt ist.

10. Mehrschichtiger Gegenstand nach Anspruch 1, wobei dieses polymere Farbstofffixierungsmittel ein Polymer enthält, das Monomerreste enthält, die sich von einem oder mehreren stickstoffhaltigen Monomeren ableiten, ausgewählt aus: 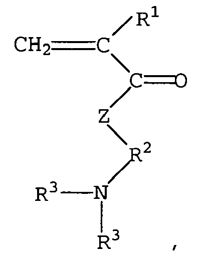 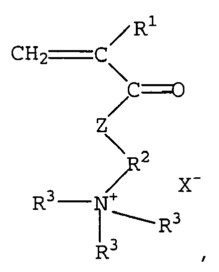 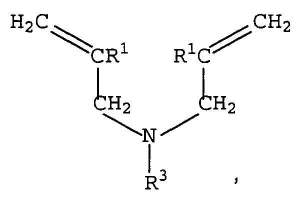 und 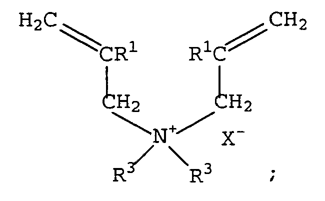 worin R¹ unabhängig bei jedem Auftreten in jeder Struktur für H oder einen C₁-C₃-aliphatischen Rest steht, R² unabhängig in jeder Struktur für eine divalente Verbindungsgruppe, ausgewählt aus C₂-C₂₀-aliphatischen Kohlenwasserstoffen, Polyethylenglykol und Polypropylenglykol, steht, R³ unabhängig bei jedem Auftreten in jeder Struktur für H, C₁-C₂₂₋aliphatischen Kohlenwasserstoff oder einen Rest aus der Reaktion des Stickstoffs mit Epichlorhydrin steht, Z ausgewählt ist aus -O- oder -NR⁴-, worin R⁴ gleich H oder CH₃ ist, und X ein Halogenid oder Methylsulfat ist.

11. Mehrschichtiger Gegenstand nach Anspruch 1, wobei diese Beschichtungszusammensetzung ein pH von weniger als 7 aufweist.

12. Mehrschichtiger Gegenstand nach Anspruch 1, wobei dieses mikroporöse Substrat ein mit Inkjet beschreibbares Substrat umfasst.

13. Mehrschichtiger Gegenstand nach Anspruch 1, wobei dieses mikroporöse Substrat, das wenigstens teilweise mit dieser im Wesentlichen wasserbeständigen Beschichtungszusammensetzung beschichtet ist, eine Dicke von wenigstens 0,1 Mil (2,54 *µ*m) aufweist.

14. Mehrschichtiger Gegenstand nach Anspruch 1, wobei dieses im Wesentlichen nichtporöse Material ausgewählt ist aus im Wesentlichen nichtporösen thermoplastischen Polymeren, im Wesentlichen nichtporösen metallisierten thermoplastischen Polymeren, im Wesentlichen nichtporösen wärmegehärteten Polymeren, im Wesentlichen nichtporösen Elastomeren, im Wesentlichen nichtporösen Metallen und Mischungen davon.

15. Mehrschichtiger Gegenstand nach Anspruch 14, wobei diese thermoplastischen Polymere ausgewählt sind aus Polyethylen, Polyethylen hoher Dichte, Polyethylen niedriger Dichte, Polypropylen, Poly(vinylchlorid), Saran, Polystyrol, schlagzähem Polystyrol, Nylon, Polyestern, Copolymeren von Ethylen und Acrylsäure, Copolymeren von Ethylen und Methacrylsäure und Mischungen davon.

16. Mehrschichtiger Gegenstand nach Anspruch 14, wobei diese wärmegehärteten Polymere ausgewählt sind aus wärmegehärtetem Phenolformaldehydharz, wärmegehärtetem Melaminformaldehydharz und Mischungen davon.

17. Mehrschichtiger Gegenstand nach Anspruch 14, wobei diese Elastomere ausgewählt sind aus natürlichem Kautschuk, Neopren, Styrol-Butadien-Kautschuk, Acrylnitril-Butadien-Styrol-Kautschuk, elastomeren Polyurethanen, elastomeren Copolymeren von Ethylen und Propylen und Mischungen davon.

18. Mehrschichtiger Gegenstand nach Anspruch 14, wobei diese Metalle ausgewählt sind aus Eisen, Stahl, Kupfer, Messing, Bronze, Chrom, Zink, Stanzmetall, Aluminium, Cadmium und Mischungen davon.

19. Mehrschichtiger Gegenstand nach Anspruch 1, wobei dieses mikroporöse Substrat zumindest teilweise mit diesem im Wesentlichen nichtporösen Material durch Schmelzbindung in Abwesenheit eines Klebstoffs verbunden ist.

20. Mehrschichtiger Gegenstand nach Anspruch 1, wobei dieses mikroporöse Substrat zumindest teilweise mit diesem im Wesentlichen nichtporösen Material mit einem Klebstoff verbunden ist.

21. Mehrschichtiger Gegenstand nach Anspruch 20, wobei dieser Klebstoff ausgewählt ist aus Polyvinylacetat, Stärken, Gumen, Polyvinylalkohol, tierischen Klebstoffen, Acrylverbindung, Epoxyverbindung, polyethylenhaltigen Klebstoffen, kautschukhaltigen Klebstoffen und Mischungen davon.

22. Verfahren zur Herstellung eines mehrschichtigen Gegenstands, umfassend die Schritte:
(a) Zur-Verfügung-Stellen eines mikroporösen Substrats mit einer oberen Oberfläche und einer unteren Oberfläche,
(b) Zur-Verfügung-Stellen einer im Wesentlichen wasserbeständigen Beschichtungszusammensetzung, die eine stabile Dispersion enthält von:
a. einer wässrigen Polyurethandispersion und
b. einem kationischen stickstoffhaltigen polymeren Farbstofffixierungsmittel, das wenigstens teilweise in einem wässrigen Medium gelöst ist,
(c) zumindest teilweises Aufbringen dieser Beschichtungszusammensetzung auf wenigstens eine Oberfläche dieses mikroporösen Substrats,
(d) zumindest teilweises Verbinden dieses mikroporösen Substrats aus (c) mit einem im Wesentlichen nichtporösen Material.

23. Verfahren nach Anspruch 22, wobei dieses mikroporöse Substrat, diese Beschichtungszusammensetzung und dieses im Wesentlichen nichtporöse Material wie in einem der Ansprüche 2 bis 18 definiert sind.

24. Verfahren nach Anspruch 22, wobei dieses mikroporöse Substrat wenigstens teilweise mit diesem im Wesentlichen nichtporösen Material wie in einem der Ansprüche 19 bis 21 definiert verbunden ist.

## Revendications

1. Article multicouche comprenant un substrat microporeux au moins partiellement relié à une matière sensiblement non poreuse, ledit substrat microporeux au moins partiellement enduit d'une composition de revêtement sensiblement résistante à l'eau, ladite composition de revêtement comprenant une dispersion stable de :
(a) une dispersion aqueuse de polyuréthanne; et
(b) une matière de fixation de colorant polymérique contenant de l'azote cationique au moins partiellement dissoute dans un milieu aqueux.

2. Article multicouche suivant la revendication 1, dans lequel le substrat microporeux précité comprend :
(a) une polyoléfine;
(b) une matière de silice particulaire; et
(c) une porosité dans laquelle les pores constituent au moins 35 % en volume du substrat microporeux.

3. Article multicouche suivant la revendication 2, dans lequel ladite polyoléfine est choisie parmi le polyéthylène, le polypropylène et leurs mélanges.

4. Article multicouche suivant la revendication 3, dans lequel ledit polyéthylène comprend un polyéthylène de poids moléculaire élevé essentiellement linéaire ayant une viscosité intrinsèque d'au moins 10 dl/g, et ledit polypropylène comprend un polypropylène de poids moléculaire élevé essentiellement linéaire ayant une viscosité intrinsèque d'au moins 5 dl/g.

5. Article multicouche suivant la revendication 2, dans lequel ladite matière de silice particulaire comprend de la silice précipitée.

6. Article multicouche suivant la revendication 2, dans lequel la matière de silice particulaire précitée constitue de 50 à 90 % en poids du substrat microporeux précité.

7. Article multicouche suivant la revendication 2, dans lequel les pores précités constituent de 35 % à 95 % en volume du substrat microporeux précité.

8. Article multicouche suivant la revendication 1, dans lequel la dispersion aqueuse de polyuréthanne précitée est choisie parmi les dispersions aqueuses de polyuréthannes anioniques, de polyuréthannes cationiques, de polyuréthannes non ioniques et de leurs mélanges.

9. Article multicouche suivant la revendication 8, dans lequel le polyuréthanne anionique précité est choisi parmi les polyéther polyuréthannes aromatiques, les polyéther polyuréthannes aliphatiques, les polyester polyuréthannes aromatiques, les polyester polyuréthannes aliphatiques, les polycarprolactame polyuréthannes aromatiques, les caprolactame polyuréthannes aliphatiques et leurs mélanges.

10. Article multicouche suivant la revendication 1, dans lequel la matière de fixation de colorant polymérique précitée comprend un polymère comprenant des résidus de monomère provenant d'un ou plusieurs monomères contenant de l'azote choisis parmi : 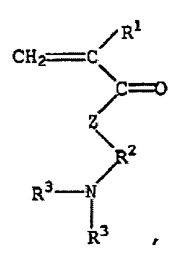 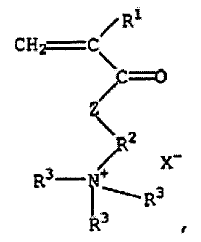 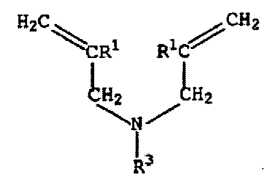 et 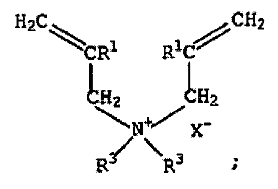 dans lesquels R¹ représente indépendamment pour chaque présence dans chaque structure, H ou un groupe aliphatique en C₁ à C₃, R² représente indépendamment pour chaque structure un groupe de liaison divalent choisi parmi les hydrocarbures aliphatiques en C₂ à C₂₀, le polyéthylène glycol et le polypropylène glycol, R³ représente indépendamment pour chaque présence dans chaque structure H, un hydrocarbure aliphatique en C₁ à C₂₂ ou un résidu provenant de la réaction de l'azote avec de l'épichlorhydrine, Z est choisi parmi -O- et -NR⁴-, où R⁴ est H ou CH₃, et X est un halogénure ou méthylsulfate.

11. Article multicouche suivant la revendication 1, dans lequel la composition de revêtement précitée a un pH inférieur à 7.

12. Article multicouche suivant la revendication 1, dans lequel le substrat microporeux précité comprend un substrat enregistrable par jet d'encre.

13. Article multicouche suivant la revendication 1, dans lequel le substrat microporeux précité au moins partiellement enduit de la composition de revêtement sensiblement résistante à l'eau a une épaisseur d'au moins 0,1 millième de pouce.

14. Article multicouche suivant la revendication 1, dans lequel la matière sensiblement non poreuse précitée est choisie parmi les polymères thermoplastiques sensiblement non poreux, les polymères thermoplastiques métallisés sensiblement non poreux, les polymères thermodurcis sensiblement non poreux, les matières élastomères sensiblement non poreuses, les métaux sensiblement non poreux et leurs mélanges.

15. Article multicouche suivant la revendication 14, dans lequel lesdits polymères thermoplastiques sont choisis parmi le polyéthylène, le polyéthylène à haute densité, le polyéthylène à basse densité, le polypropylène, le poly(chlorure de vinyle), le saran, le polystyrène, le polystyrène à haute résistance au choc, les Nylons, les polyesters, les copolymères d'éthylène et d'acide acrylique, les copolymères d'éthylène et d'acide méthacrylique et leurs mélanges.

16. Article multicouche suivant la revendication 14, dans lequel lesdits polymères thermodurcis sont choisis parmi une résine de phénol-formaldéhyde thermodurcie, une résine de mélamine-formaldéhyde thermodurcie et leurs mélanges.

17. Article multicouche suivant la revendication 14, dans lequel les élastomères précités sont choisis parmi le caoutchouc naturel, le néoprène, le caoutchouc de styrène-butadiène, le caoutchouc d'acrylonitrile-butadiène-styrène, les polyuréthannes élastomères, les copolymères élastomères d'éthylène et de propylène et leurs mélanges.

18. Article multicouche suivant la revendication 14, dans lequel les métaux précités sont choisis parmi le fer, l'acier, le cuivre, le laiton, le bronze, le chrome, le zinc, le métal pour matrice, l'aluminium, le cadmium et leurs mélanges.

19. Article multicouche suivant la revendication 1, dans lequel le substrat microporeux précité est au moins partiellement relié à la matière sensiblement non poreuse précitée au moyen d'une liaison par fusion en l'absence d'un adhésif.

20. Article multicouche suivant la revendication 1, dans lequel le substrat microporeux précité est au moins partiellement relié à la matière sensiblement non poreuse précitée par un adhésif.

21. Article multicouche suivant la revendication 20, dans lequel ledit adhésif est choisi parmi l'acétate de polyvinyle, les amidons, les gommes, l'alcool polyvinylique, les colles animales, les matières acryliques, les époxydes, les adhésifs contenant du polyéthylène, les adhésifs contenant du caoutchouc et leurs mélanges.

22. Procédé de production d'un article multicouche comprenant les étapes de :
(a) formation d'un substrat microporeux ayant une surface supérieure et une surface inférieure;
(b) formation d'une composition de revêtement sensiblement résistante à l'eau comprenant une dispersion stable de :
a. une dispersion aqueuse de polyuréthanne; et
b. une matière de fixation de colorant polymérique contenant de l'azote cationique au moins partiellement dissoute dans un milieu aqueux;
(c) application au moins partielle de ladite composition de revêtement à au moins une surface dudit substrat microporeux;
(d) liaison au moins partielle dudit substrat microporeux de (c) à une matière sensiblement non poreuse.

23. Procédé suivant la revendication 22, dans lequel le substrat microporeux précité, la composition de revêtement précitée et la matière sensiblement non poreuse précitée sont suivant l'une quelconque des revendications 2 à 18.

24. Procédé suivant la revendication 22, dans lequel le substrat microporeux précité est au moins partiellement relié à la matière sensiblement non poreuse précitée suivant l'une quelconque des revendications 19 à 21.
